**Europäisches Patentamt**

**European Patent Office**

**Office européen des brevets**

(19)

(11) Veröffentlichungsnummer: **0 245 624**
**B1**

(12) # EUROPÄISCHE PATENTSCHRIFT

(45) Veröffentlichungstag der Patentschrift: **09.05.90**

(21) Anmeldenummer: **87104359.2**

(22) Anmeldetag: **24.03.87**

(51) Int. Cl.⁵: **B 62 D 53/08, B 62 D 47/02**

(54) **Knickschutzvorrichtung für Gelenkfahrzeuge.**

(30) Priorität: **03.05.86 DE 3615071**

(43) Veröffentlichungstag der Anmeldung:
**19.11.87 Patentblatt 87/47**

(45) Bekanntmachung des Hinweises auf die
Patenterteilung:
**09.05.90 Patentblatt 90/19**

(84) Benannte Vertragsstaaten:
**AT CH DE ES FR IT LI SE**

(56) Entgegenhaltungen:
**EP-A-0 122 956**
**WO-A-84/00730**
**DE-A-3 127 547**
**DE-A-3 405 871**
**GB-A-2 069 428**
**US-A-4 106 792**

(73) Patentinhaber: **Daimler-Benz Aktiengesellschaft**
**Postfach 600202 Mercedesstrasse 136**
**D-7000 Stuttgart 60 (DE)**

(72) Erfinder: **Bayha, Wulf**
**Gögelbachstrasse 24**
**D-7000 Stuttgart 60 (DE)**
Erfinder: **Forchert, Thomas**
**Wildungerstrasse 74**
**D-7000 Stuttgart 50 (DE)**
Erfinder: **Rehfus, Bernd**
**Schäfflerstrasse 4**
**D-7300 Esslingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# EP 0 245 624 B1

**Beschreibung**

Die Erfindung betrifft eine Knickschutzvorrichtung für willkürlich lenkbare Gelenkfahrzeuge, insbesondere Gelenkbusse, bestehend aus einem lenkbaren Vorderwagen und mindestens einem damit über Gelenk verbundenen Nachläuferwagen, mit Istwertaufnehmern für den Lenkwinkel der Lenkräder und den Knickwinkel des Gelenkes sowie einer Steuerschaltung, die eingangsseitig mit den Istwertgebern und ausgangsseitig mit einer Ventilanordnung zur Steuerung des Zu- bzw. Abflusses von Fluid, insbesondere Hydraulikmedium, zu bzw. von Verdrängeraggregaten, insbesondere Kolben-Zylinder-Aggregaten, verbunden ist, welche zur passiven Knickwinkelsteuerung zwischen den gelenkig verbundenen Wagen mit insgesamt mindestens zwei Kammern angeordnet sind, von denen eine bei Änderung des Knickwinkels jeweils ihr Volumen unter Abgabe von Fluid verkleinert und eine ihr Volumen vergrößert, wobei die ihr Volumen bei Knickwinkeländerungen gegensinnig ändernden Kammern zum Austausch von Fluid bzw. Hydraulikmedium über ein die Ventilanordnung bildendes Proportionalventil mit steuerbarem Drosselwiderstand bzw. Schließdruck verbunden sind.

Eine derartige Knickschutzsteuerung ist Gegenstand der DE—PS 31 27 547. Dabei sind die Istwertgeber für Lenk- und Knickwinkel bzw. die nachgeschalteten Meßumformer derart ausgebildet, daß als Ausgangssignale annähernd gleich elektrische Größen erzeugt werden, wenn das Gelenkfahrzeug eine im wesentlichen schlupffreie stationäre Kreisfahrt ausführt, bei der der Lenkwinkel unverändert bleibt. Falls der Knickwinkel vom Wert für stationäre Kreisfahrt abweicht, so zeigen die die Lenk- und Knickwinkel wiedergebenden Ausgangssignale der Istwertgeber bzw. Meßumformer eine entsprechende Abweichung voneinander. Wenn nun bei Lenkmanövern ein Knickwinkel auftritt, bei dem die den Knickwinkel wiedergebende elektrische Größe oberhalb oder unterhalb eines Toleranzbereiches in der Umgebung der den Lenkwinkel wiedergebenden elektrischen Größe liegt, so werden die Verdrängeraggregate jeweils in einer Bewegungsrichtung des Nachläuferwagens relativ zum Vorderwagen gesperrt, und zwar derart, daß die Beweglichkeit des Nachläuferwagens relativ zum Vorderwagen in einer Richtung, bei der sich die Abweichung der die Knick- und Lenkwinkel wiedergebenden elektrischen Größen vergrößert, blockiert ist. In der jeweils anderen Richtung kann sich der Nachläuferwagen praktisch freie bewegen. Um die beschriebene Knickwinkelsteuerung auszuführen, sind Kolben-Zylinder- oder ähnliche Verdränger-Aggregate angeordnet, wobei bei einer Knickwinkeländerung jeweils das Volumen einer Kammer verkleinert und das Volumen einer anderen Kammer vergrößert wird. Um die Beweglichkeit des Nachläuferwagens in jeweils einer Richtung blockieren zu können, wird der Abfluß der sich bei dieser Bewegungsrichtung verkleinernden Kammer mittels eines von der Steuerschaltung betätigten Ventiles abgesperrt. Damit kann der Nachläuferwagen nur noch eine Bewegung ausführen, bei der das Volumen der Kammer mit gesperrtem Abfluß vergrößert wird.

Diese bekannte Knickschutzsteuerung beruht auf der Annahme, daß der sich bei stationärer Kreisfahrt einstellende Knickwinkel bei stabilen Fahrzuständen allenfalls dann erreicht werde, wenn der Lenkwinkel über längere Zeit konstant bleibe, d.h. wenn der Fall einer stationären Kreisfahrt zumindest angenähert vorliege. In allen übrigen Fälle nähere sich dagegen der Knickwinkel dem Wert für stationäre Kreisfahrt mehr oder weniger weit an, und zwar jeweils in einer Bewegungsrichtung, bei der sich der Nachläuferwagen aus seiner Lage bei gestrecktem Fahrzeug zunehmend entfernt.

Diese Annahme entspricht jedoch nicht der Realität. Wenn z.B. das Gelenkfahrzeug bei höherer Geschwindigkeit aufeinanderfolgende Kurven mit entgegengesetztem Krümmungssinn (Sinusfahrt)durchfahren muß, so wird der dem jeweiligen Lenkwinkel zugeordnete Knickwinkel für schlupffreie stationäre Kreisfahrt mehrfach überschritten, weil die Extremwerte des Knickwinkels aufgrund der Trägheit des Nachläuferwagens erst jeweils mit einem zeitlichen Abstand nach den Extremwerten der Lenkwinkel erreicht werden, d.h. die Knickwinkel sind gegenüber den Lenwinkeln phasenverschoben. Gleichwohl liegt in der Regel ein völlig stabiles Fahrverhalten vor, d.h. es besteht keinerlei Gefahr für das Fahrzeug. Würden bei derartigen Fahrmanövern die Gelenksperren gemäß der DE—PS 31 27 547 derart gesteuert, daß die auftretenden Knickwinkel bzw. die dieselben wiedergebende elektrische Größ annahernd auf den Wert des Lenkwinkels bzw. die denselben wiedergebende elektrische Größe begrenzt wären, so würde notwendigerweise eine an sich ungefährliche Schwenkbewegung des Nachläuferwagens gegenüber dem Vorderwagen derart begrenzt, daß der Nachläuferwagen auf den Vorderwagen Stöße auszuüben vermag, die den Vorderwagen zu Schlingerbewegungen anregen können. Um ein derartig unerwünschtes Verhalten zu vermeiden, müßte bei einer Anordnung gemäß der DE—PS 31 27 547 der genannte Toleranzbereich außerordentlich groß bemessen sein, um dem Nachläuferwagen bei der dargestellten Sinusfahrt des Gelenkfahrzeuges eine hinreichende Beweglichkeit gegenüber dem Vorderwagen zu gewähren. Damit muß aber der Nachteil in Kauf genommen werden, daß die Knickschutzvorrichtung im Gefahrenfalle erst bei relativ großer Abweichung des jeweils tatsächlich vorliegenden Knickwinkels von einem bei stabiler Fahrt auftretenden Knickwinkel im Sinne einer Sperrung des Gelenkes wirken kann. Diese große Beweglichkeit des Nachläuferwagens stellt dann im Gefahrenfalle eine zusätzliche Unsicherheit dar.

Deshalb ist es Aufgabe der Erfindung, eine Knickschutzvorrichtung zu schaffen, welche dem Nachläuferwagen bei stabiler Kurvenfahrt die gewünschte Beweglichkeit ermöglicht, gleichwohl aber im Gefahrenfalle hinreichend frühzeitig zu reagieren vermag.

Diese Aufgabe bei einer Knickschutzvorrichtung der eingangs angegebenen Gattung dadurch gelöst,

2

EP 0 245 624 B1

daß als Teil der eingangsseitig zusätzlich zu den bereits genannten Istwertgebern für Lenk- und Knickwinkel mit Istwertgebern für die Fahrgeschwindigkeit verbundenen Steuerschaltung ein Prozessor bzw. Rechner angeordnet ist, welcher aus den jeweiligen Istwerten von Lenkwinkel sowie Fahrgeschwindigkeit einen bei stabiler Fahrt unter idealisierten Bedingungen zu erwartenden, zeitabhängigen Wert des Knickwinkels ermittelt bzw. berechnet — d.h. eine Rechnersimulation des Fahrzustandes ausführt — und daß die Steuerschaltung das Proportionalventil im Sinne eines maximalen Drosselwiderstandes bzw. Schließdruckes oder eine Sperrung betätigt, wenn der Betrag der Abweichung zwischen dem Istwert des Knickwinkels und dem jeweils zu erwartenden Knickwinkel eine Schwelle überschreitet und gleichzeitig die aus den Signalen des Istwertgebers für den Knickwinkel ermittelbare Relativbewegung zwischen Vorder- und Nachläuferwagen eine die Abweichung vergrößernde Tendenz hat, bzw. im Sinne eines nach vorgebbarer Funktion ansteigenden bzw. abnehmenden Drosselwiderstandes bzw. Schließdruckes ansteuert, wenn der Betrag der Abweichung unter der Schwelle liegt und/oder die Relativbewegung eine die Abweichung verkleinernde Tendenz hat.

Die Erfindung beruht auf dem allgemeinen Gedanken, zwischen zwei gelenkig miteinander verbundenen Wagen, etwa zwischen Vorderwagen und Nachläuferwagen, ein Fluidsystem anzuordnen, welches zwischen einem Zustand ohne bzw. mit geringer Dämpfung der Beweglichkeit des Knickgelenkes und einem Zustand maximaler Dämpfung bzw. Sperrung der Beweglichkeit kontinuierlich gesteuert werden kann. Die Steuerung erfolgt mittels eines Prozessors bzw. Rechners, welcher nach Art einer Modellrechnung Fahrzustände errechnet, die aufgrund der jeweiligen Fahrgeschwindigkeit und Lenkungsbetätigung zu erwarten sind. Die Rechnersimulation ermöglicht es, typische geschwindigkeitsabhängige Unterschiede des Fahrverhaltens, insbesondere auch die bei Sinusfahrt gegebenenfalls auftretenden Knickwinkel bzw. Knickwinkeländerungen oder -geschwindigkeiten ohne vorzeitige Sperrung des Gelenkes zu berücksichtigen.

Der besondere Vorzug der Rechnersimulation besteht darin, daß die Berechnung der zu erwartenden Knickwinkel, die vom Rechner bzw. Prozessor mit den jeweiligen Istwerten des Knickwinkels vergleichen werden und ein wesentliches Kriterium für die Unterscheidung zwischen einem gefährlich instabilen und einem vergleichsweise ungefährlichen instationären Fahrzustand darstellen, sowie insbesondere die Berechnung des nach vorgebbarer Funktion ansteigenden bzw. abnehmenden Drosselwiderstandes bzw. Schließdruckes des Proportionalventiles zeitlich parallel zur dynamischen Reaktion des Fahrzeuges, d.h. des Knickgelenkes desselben, auf Lenkwinkeländerungen erfolgen. Aufgrund dieser "vorausschauenden" Berechnung der jeweils vorzunehmenden Einstellung des Proportionalventiles kann verhindert werden, daß die unmittelbare Reaktion des Nachläuferwagens auf Änderungen der Einstellung des Proportionalventiles direkt auf dessen Steuerung rückwirken kann, wobei unter Umständen in kurzen aufeinanderfolgenden Abständen stark unterschiedliche Einstellungen des Proportionalventiles mit der Folge starker Druckstöße im Fluidsystem vorgenommen würden. Vielmehr ermöglicht die Erfindung eine Steuerung, bei der der Dämpfungswiderstand stetig verändert werden kann. Gleichwohl wird einem Gefahrenfalle jederzeit Rechnung getragen, weil eine starke Erhöhung des Dämpfungswiderstandes bzw. eine Sperrung des Gelenkes jederzeit möglich ist und durchgeführt wird, wenn die Rechnersimulation oder die dafür benutzten Eingangsgrößen auf eine gefährliche Situation hinweisen.

In bevorzugter Ausgestaltung der Erfindung wird bei der Rechnersimulation berücksichtigt, daß das Gelenkfahrzeug hinsichtlich seiner dynamischen Reaktion auf Lenkwinkeländerungen einem Tiefpaß zweiter Ordnung gleicht, wobei der Lenkwinkel bzw. eine davon abhängige Größe, beispielsweise der sich beim jeweiligen Lenkwinkel im Falle stationärer Kreisfahrt einstellende Knickwinkel, die Eingangsgröße und der sich in Reaktion auf die Lenkwinkeländerung zeitlich ändernde Knickwinkel des Knickgelenkes die Ausgangsgröße des Tiefpasses darstellen. Dieses Tiefpaß-Verhalten läßt sich in rechnerisch einfacher Weise berücksichtigen, wenn der zeitliche Verlauf des jeweils zu einem Zeitpunkt $(t_n)$ zu erwartenden Knickwinkels $(K_{stab})$ gemäß Anspruch 2 bestimmt wird. Für die Koeffizienten $a_i$, $a_j$ und $a_k$ gilt

$$a_i = C_1/C_0$$

$$a_j = C_2/C_0$$

$$a_k = 1/C_0$$

wobei

$$C_0 = (T_1/T)^2 + DT_1/T$$

$$C_1 = 1 - 2 (T_1/T)^2$$

$$C_2 = (T_1/T)^2 - DT_1/T$$

Hierbei bedeuten T die Abtastperiode (z.B. 25 ms) des Prozessors bzw. Rechners, $T_1$ die Zeitkonstante (z.B. 0,25 s bis 0,35 s) und D die von der Fahrgeschwindigkeit abhängige Dämpfungskonstante (z.B. etwa 4

bei 5 km/h, 1,6 bei 20 km/h, 1 bei 40 km/h und 0,8 bei 80 km/h) eines Tiefpasses mit dem Gelenkfahrzeug entsprechender Dynamik.

Gemäß einer bevorzugten Ausführungsform der Erfindung ist vorgesehen, daß die Steuerschaltung des Proportionalventils im Sinne eines nach der vorgebbaren Funktion ansteigenden bzw. abnehmenden Drosselwiderstandes bzw. Schließdruckes ansteuert, indem Drosselwiderstand bzw. Schließdruck in mit dem Betrag der tatsächlichen Knickwinkelgeschwindigkeit bzw. — bevorzugt-einer damit korrellierten Größe ansteigt bzw. abnimmt.

Die Steuerung in Abhängigkeit von der mit der Knickwinkelgeschwindigkeit korrellierten Größe erfolgt zweckmäßig gemäß Anspruch 5. Dabei berücksichtigt der Prozessor bzw. Rechner den jeweils vom entsprechenden Istwertgeber gemessenen Wert des Knickwinkels zusätzlich — mit vorgebbaren Gewichtungsfaktoren, die von der Fahrgeschwindigkeit abhängen können — im Sinne einer Synchronisation des berechneten Wertes des zu erwartenden Knickwinkels an die tatsächlichen Werte. Damit wird erreicht, daß unter idealisierten Bedingungen nicht auftretende Einflüsse auf den Istwert des Knickwinkels, beispielsweise durch Fahrbahnunebenheiten angeregte Schlingerbewegungen, bei der Rechnersimultion berücksichtigt werden. Diese Maßnahme entspricht dem "Beobachterprinzip" in der Regelungstechnik und bedeutet, daß der für idealisierte Bedingungen bestimmte Wert des zu erwartenden Knickwinkels im Sinne eines zu beobachtenden Knickwinkels modifiziert wird. Aus den modifizierten Werten läßt sich dann durch Differentiation eine zu beobachtende Knickwinkelgeschwindigkeit bestimmen, die dann ihrerseits einen den Drosselwiderstand bzw. Schließdruck des Proportionalventiles bestimmenden Parameter darstellt.

Im übrigen wird hinsichtlich bevorzugter Merkmale der Erfindung auf die Unteransprüche sowie die nachfolgende Beschreibung einer bevorzugten Ausführungsform der Erfindung anhand der Zeichnung verwiesen. Dabei zeigen

Fig. 1 eine schematisierte Draufsicht auf ein zwischen Vorderwagen und Nachläuferwagen eines Gelenkfahrzeuges angeordnetes Gelenk,

Fig. 2 einen schematisierten Schaltplan der hydraulischen Gelenksperre mit zugehöriger elektrischer Steuerschaltung und

Fig. 3 bis 3e ein Datenflußdiagramm zur Erläuterung der Funktion der Steuerschaltung bzw. von Einzelheiten des Funktionsablaufes.

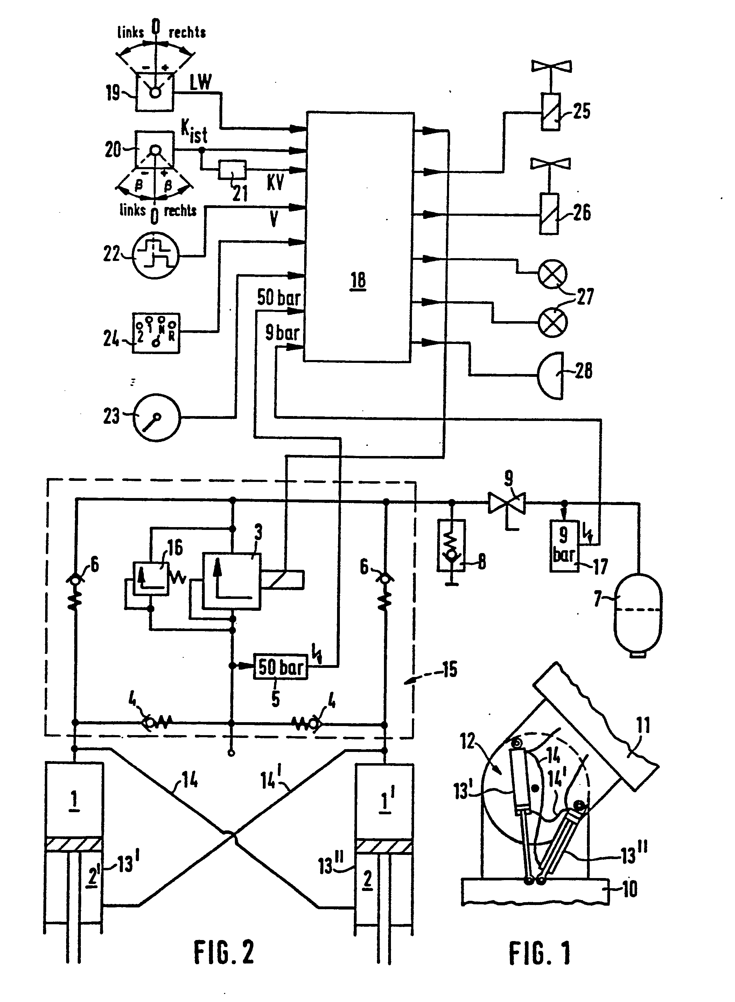

Nach Fig. 1 besteht das Gelenkfahrzeug im wesentlichen aus einem zweiachsigen Vorderwagen 10 sowie einem einachsigen Nachläuferwagen 11, dessen Achse als in der Regel einzige Antriebsachse des Fahrzeuges von einem im Nachläuferwagen 11 untergebrachten Motor angetrieben wird. Vorderwagen 10 und Nachläuferwagen 11 sind mittels eines Gelenkes 12 miteinander verbunden, derart, daß der Nachläuferwagen 11 relativ zum Vorderwagen 10 nach rechts oder links bezüglich einer Hochachse zu schwenken vermag und das Fahrzeug weitestgehend zwangsfrei den Lenkbewegungen der Vorderräder des Voderagens 10 folgen kann.

Zur Beeinflussung und insbesondere zur Begrenzung der Schwenkbewegung des Nachläuferwagens 11 relativ zum Vorderwagen, d.h. zur Beeinflussung bzw. Begrenzung des zwischen Vorderwagen 10 und Nachläuferwagen 11 auftretenden Knickwinkels, sind zwischen Vorderwagen 10 und Nachläuferwagen 11 bzw. damit fest verbundenen Teile en Kolben-Zylinder-Aggregate 13' und 13" angeordnet. Die genannten Aggregate sind jeweils doppeltwirkend, d.h. beide Aggregate 13' und 13" besitzen jeweils zwei Kammern 1, 2' bzw. 1', 2, vgl. auch Fig. 2. Wenn der Nachläuferwagen 11 gegenüber dem Vorderwagen 10 seitwärts schwenkt, d.h. eine Knickbewegung ausführt, verkleinert sich das Volumen der einen Kammern, beispielsweise 1 und 2, während sich das Volumen der anderen Kammern, beispielsweise 1' und 2', vergrößert.

Wie genauer der Fig. 2 zu entnehmen ist, ist die Kammer 1 über eine Leitung 14 mit der Kammer 2 und die Kammer 1' über eine Leitung 14' mit der Kammer 2' verbunden. Im übrigen sind die Kammern 1 und 2 einerseits und die Kammern 1' und 2' andererseits miteinander zum Austausch von Hydraulikmedium über einen Hydrauliksteuerblock 15 verbunden.

Als wesentlicher Bestandteil des Steuerblockes 15 ist ein Proportional-Druckbegrenzungsventil 3 angeordnet, welches eingangsseitig über Rückschlagventile 4 mit den Anschlüssen des Steuerblockes 15 für die Kammern 1 und 2 bzw. 1' und 2' verbunden ist, derart, daß von den genannten Kammern jeweils nur eine Strömung zum Eingang des Proportional-Druckbegrenzungsventiles 3 auftreten kann. Ausgangsseitig ist das Proportional-Druckbegrenzungsventil 3 über weitere Rückschlagventile 6 ebenfalls mit den Anschlüssen des Steuerblockes 15 für die Kammern 1 und 2 bzw. 1' und 2' verbunden. Dabei sind die letztgenannten Rückschlagventile 6 derart angeordnet, daß jeweils nur eine Strömung vom Ausgang des Proportional-Druckbegrenzungsventiles 3 zu den genannten Anschlüssen hin auftreten kann.

Außerdem ist die Ausgangsseite des Proportional-Druckbegrenzungsventiles 3 mit einem teilweise mit Druckgas gefüllten Vorratsbehälter 7 verbunden. In der Leitung zwischen dem Proportional-Druckbegrenzungsventil 3 und dem Vorratsbehälter 7 sind darüber hinaus ein Füllanschluß 8, ein Absperrhahn 9 sowie ein Fülldruckschalter 17 angeordnet, welcher bei einer Druckschwelle von ca. 9 bar umschaltet.

Parallel zum Proportional-Druckbegrenzungsventil 3 ist ein Überdruckventil 16 angeordnet, welches bei einem Differenzdruck von ca. 170 bar öffnet und die Eingangsseite des Proportional-Druckbegrenzungsventiles mit dessen Ausgangsseite verbindet.

4

Im übrigen ist auf der Eingangsseite des Proportional-Druckbegrenzungsventiles 3 noch ein Hochdruckschalter 5 angeordnet, welcher bei einer Druckschwelle von ca. 50 bar umschaltet.

Aufgrund der beschriebenen Anordnung wird bei Knickbewegungen des Nachläuferwagens 11 gegenüber dem Vorderwagen 10 aus den einen Kammern, beispielsweise 1 und 2, verdrängtes hydraulisches Medium über das Proportional-Druckbegrenzungsventil 3 in die anderen Kammern, z.B. 1' und 2', geleitet. Soweit die Volumensänderungen der sich vergrößernden sowie der sich verkleinernden Kammern nicht genau gleich sind, wird ein geringer Anteil 'des hydraulischen Mediums in den Vorratsbehälter 7 eingeführt bzw. aus demselben zugeführt. Da der Schließdruck des Proportional-Druckbegrenzungsventiles steuerbar ist, erfolgt der Austausch des hydraulischen Mediums zwischen den Kammern 1 und 2 sowie 1' und 2' gegen einen steuerbaren Drosselwiderstand, d.h. die Knickbewegung läßt sich steuerbar dämpfen und bei maximalem Schließdruck des Proportional-Druckbegrenzungsventiles 3 praktisch blockieren.

Die Steuerung des Proportional-Druckbegrenzungsventiles 3 erfolgt mittels einer elektronischen Steuerschaltung 18, die mit einem programmierbaren Rechner- bzw. Prozessorsystem ausgerüstet ist.

Eingangsseitig ist die Steuerschaltung 18 mit Istwertgebern 19 und 20 für den Lenkwinkel LW der Lenkräder sowie dem Knickwinkel $K_{ist}$ des Gelenkes 12 verbunden. Als Istwertgeber können beispielsweise Potentiometer dienen, welche vorzugsweise redundant angeordnet sind und von relativ zueinander beweglichen Teilen am Lenkgetriebe des Fahrzeuges bzw. am Gelenk 12 zwischen Vorder- und Nachläuferwagen 10 und 11 angetrieben werden. Damit werden den jeweiligen Winkeln entsprechende elektrische Spannungen bzw. Spannungspegel erzeugt.

Der Istwertgeber 20 für den Knickwinkel $K_{ist}$ ist ausgangsseitig noch mit einem Differenzierglied verbunden, welches als Istwertgeber 21 für die Knickwinkelgeschwindigkeit KV dient. Dementsprechend erzeugt der Istwertgeber 21 jeweils eine elektrische Spannung, deren Pegel die Geschwindigkeit der Änderung des Knickwinkels $K_{ist}$ wiedergibt. Diese Spannung wird einem weiteren Eingang der Steuerschaltung 18 zugeleitet.

Des weiteren ist ein Istwertgeber 22 für die Fahrgeschwindigkeit des Gelenkfahrzeuges vorhanden. Dabei handelt es sich bevorzugt um zwei Impulsgeber, welche phasenverschoben zueinander arbeiten und jeweils im übrigen identische Impulsfolgen mit von der Fahrgeschwindigkeit V abhängigem Tastverhältnis od.dgl. erzeugen. Diese elektrischen Impulse werden weiteren Eingängen der Steuerschaltung 18 zugeleitet. Dabei stellt das geschwindigkeitsabhängige Tastverhältnis ein Signal für die Geschwindigkeit dar, während das Vorzeichen der Phasenverschiebung ein Signal für die Fahrtrichtung, d.h. für Vorwärts- oder Rückwärtsfahrt, bildet. Zusätzlich oder alternativ zu den Istwertgebern 22 kann auch ein Tachogenerator 23 angeordnet sein, welcher eine elektrische Spannung mit der jeweiligen Fahrgeschwindigkeit entsprechendem Pegel erzeugt.

Des weiteren ist die Steuerschaltung eingangsseitig mit einem Signalgeber 24 verbunden, welcher vom Schalthebel des Getriebes bzw. einem damit verbundenen Teil betätigt wird und der Steuerschaltung je nach eingelegter Fahrstufe unterschiedliche Signale zuleitet.

Im übrigen ist die Steuerschaltung eingangsseitig mit den Druckschaltern 5 und 17 verbunden, so daß für die Steuerschaltung jeweils Signale zur Verfügung stehen, welche wiedergeben, ob die jeweiligen Druckschwellen über- oder unterschritten sind.

Ausgangsseitig ist die Steuerschaltung 18 vor allem mit dem Proportional-Druckbegrenzungsventil 3 zu dessen Steuerung verbunden. Darüber hinaus können von der Steuerschaltung 8 noch Stellorgane 25 und 26 für die Fahrzeugbremse bzw. die Motorsteuerung, und/oder verschiedene Warnlampen 27 für gefährliche Fahrzustände od.dgl. und/oder ein Warnsummer gesteuert werden,

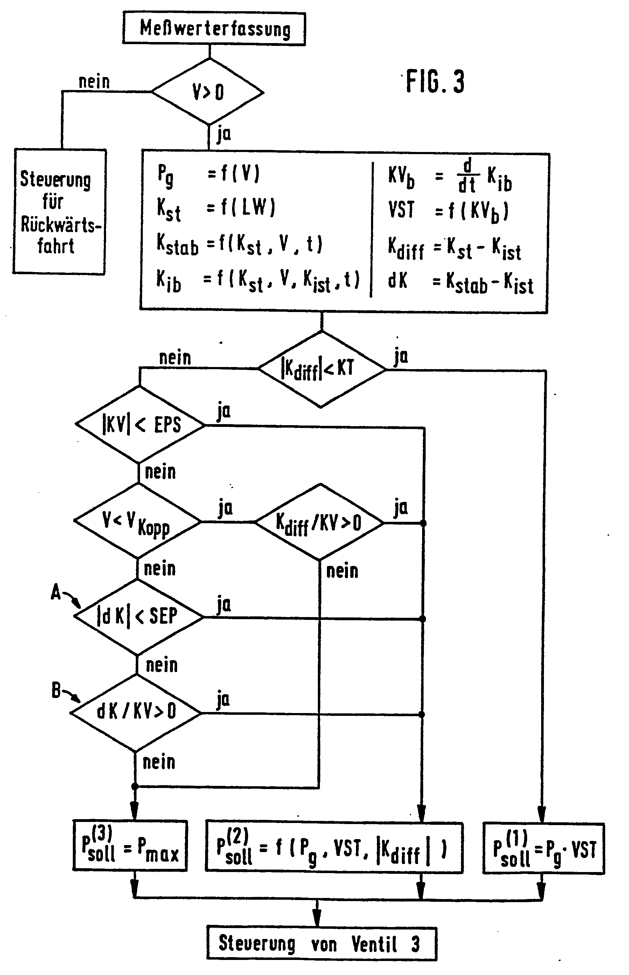

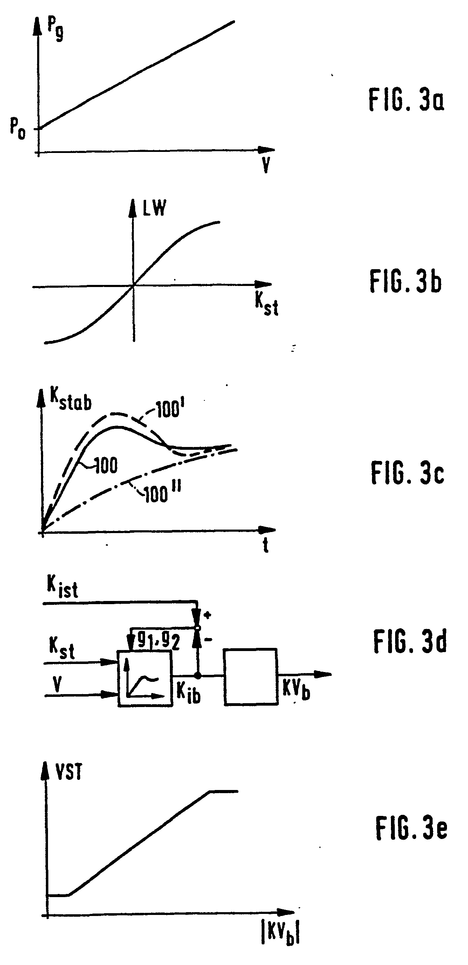

Die Funktionsweise der Steuerschaltung 18 ist in Fig. 3 bzw. den Figuren 3a bis 3e genauer dargestellt.

Zunächst wird überprüft, ob das Fahrzeug vorwärts oder rückwärts fährt, d.h. ob die Geschwindigkeit V größer oder kleiner als Null ist. Für diese Überprüfung werden in der Regel die Signale der Istwertgeber 22 und 24 bzw. des Tachogenerators 23 ausgewertet. Bei sehr geringen Geschwindigkeiten wird dagegen lediglich überprüft, ob der Signalgeber 24 mit seinen Signalen eine Getriebestufe für Vorwärtsfahrt oder eine solche für Rückwärtsfahrt anzeigt.

Entsprechende dem Abfrageergebnis arbeitet die Steuerschaltung 18 dann im Sinne einer Steuerung, insbesondere des Proportional-Druckbegrenzungsventiles 3, für Vorwärts- oder für Rückwärtsfahrt. Da bei sehr geringen Geschwindigkeiten lediglich die Signale des Signalgebers 24 ausgewertet werden, welcher die jeweils eingelegte Getriebestufe anzeigt, kann das Gelenkfahrzeug beispielsweise beim Anfahren in Vorwärtsrichtung am Berg unter Umständen zunächst noch etwas rückwärts rollen, gleichwohl arbeitet die Steuerschaltung 18 im Sinne einer Steuerung für Vorwärtsfahrt.

Sodann wird zunächst ein Druck $P_g$ als Funktion der Geschwindigkeit V berechnet. Nach Fig. 3a ist dazu beispielsweise vorgesehen, daß ein Mindestdruck $p_0$ mit zunehmender Geschwindigkeit V linear ansteigt.

Für den jeweils vom Istwertgeber 19 gemessenen Lenkwinkel LW wird ein Knickwinkel $K_{st}$ für stationäre — schlupffreie — Kreisfahrt berechnet. Der Winkel $K_{st}$ also derjenige Kinckwinkel, welcher sich bei einem unverändert beibehaltenen Lenkwinkel LW bei langsamer schlupffreier Fahrt einstellt. In Fig. 3b ist die Abhängigkeit des Knickwinkels $K_{st}$ für stationäre Kreisfahrt vom jeweiligen Lenkwinkel LW beispielhaft dargestellt.

Des weiteren wird modellhaft der Verlauf eines bei idealisierten Bedingungen zu erwartenden Knickwinkels $K_{stab}$ berechnet, welcher die Reaktion des Gelenkfahrzeuges bzw. des Knickgelenkes desselben auf eine Änderung des Lenkwinkels darstellt.

In Fig. 3c zeigt die Kurve 100 den Verlauf des zu erwartenden Knickwinkels $K_{stab}$ bei einer Fahrgeschwindigkeit V in Abhängigkeit von der Zeit t nach einer Änderung des Lenkwinkels. Zunächst tritt eine starke Änderung des Knickwinkels in einer Richtung ein, bis ein Extremwert erreicht ist. Sodann ändert sich der Knickwinkel etwa in umgekehrter Richtung und geht dann in einen Endwert über, welcher im wesentlichen dem Knickwinkel $K_{st}$ für stationäre Kreisfahrt bei dem neuen, nach der Lenkwinkeländerung vorliegenden Wert des Lenkwinkels entspricht. Die Kurve 100 in Fig. 3c zeigt beispielhaft, wie sich das Gelenkfahrzeug bei der Geschwindigkeit V nach einer Änderung des Lenkwinkels — beispielsweise bei einer sprunghaften Änderung des Lenkwinkels vom Wert Null auf den jeweiligen Istwert — auf einem Endwert des Knickwinkels einschwenkt. Die Kurve 100' zeigt das Einschwenkverhalten bei erhöhter Geschwindigkeit, während die Kurve 100'' das Verhalten bei sehr langsamer Geschwindigkeit darstellt.

Die modellhafte Berechnung des zu erwartenden Knickwinkels $K_{stab}$ beruht auf der Erkenntnis, daß ein Gelenkfahrzeug bezüglich der dynamischen Reaktion des Knickwinkels (Ausgangsgröße) auf eine Änderung des Lenkwinkels (Eingangsgröße) näherungsweise als Tiefpaß zweiter Ordnung aufgefaßt werden kann, wobei die Dämpfungskonstante D (vgl. die Beschreibungseinleitung) dieses Tiefpasses stark geschwindigkeitsabhängig ist, während die Zeitkonstante T (vgl. die Beschreibungseinleitung) des Tiefpasses von der Geschwindigkeit weitgehend unabhängig ist und sich nur — allerdings relativ geringfügig — in Abhängigkeit vom Beladezustand des Fahrzeuges ändert. Aus diesem Grunde kann die Zeitkonstante als nehezu konstant angenommen werden.

Die Berechnung des bei stabiler Kurvenfahrt unter idealisierten Bedingungen zu erwartenden Knickwinkels $K_{stab}$ erfolgt, wie weiter unter näher erläutert wird, vor allem dazu, ein Vergleichskriterium zu schaffen, um überprüfen zu können, ob sich das Fahrzeug in einem gefährlich instabilen Fahrzustand oder in einer stabilen Phase mit im wesentlichen stationärem Knickwinkel (stationäre Kreistahrt) oder instationärem Knickwinkel (Regelfall einer stabilen Kurvenfahrt) befindet.

Der jeweilige Wert des zu ertwartenden Knickwinkels $K_{stab}$ stellt also ein wesentliches Entscheidungskriterium dafür dar, ob das Proportionalventil im Sinne einer Sperrung bzw. eines maximalen Schließdruckes oder eines maximalen Drosselwiderstandes betätigt werden muß oder nicht. Dagegen dient der Wert von $K_{stab}$ nicht als Parameter zur Steuerung des Drosselwiderstandes bzw. Schließdruckes des Proportionalventiles bei anderen Fahrzuständen.

Hierfür wird ein gegenüber $K_{stab}$ modifizierter Knickwinkel berechnet, und zwar ein zu beobachtender Knickwinkel $K_{lb}$. Die Berechnung erfolgt in prinzipiell gleicher Weise wie die Berechnung des unter idealisierten Bedingungen zu erwartenden Knickwinkels $K_{stab}$, jedoch mit dem Unterschied, daß der zunächst nur in Abhängigkeit vom Lenkwinkel und der Fahrgeschwindigkeit berechnete zeitliche Verlauf des zu beobachtenden Knickwinkels $K_{lb}$ mit dem tatsächlich vorliegenden Istwert $K_{lst}$ des Knickwinkels verglichen wird, vgl. Fig. 3d. Sodann erfolgt eine Korrektur des Berechnungsergebnisses in Abhängigkeit von de Größe der auftretenden Differenz, wobei geschwindigkeitsabhängige Gewichtungsfaktoren $g_1$, $g_2$ usw. für das Maß der Berücksichtigung der aufgetretenen Differenz verwendet werden.

Danach wird eine zu beobachtenden Knickwinkelgeschwindigkeit $KV_b$ durch Differentiation der zu beobachtenden Knickwinkel $K_{lb}$ berechnet.

Wie weiter unten dargestellt wird, beeinflußt das Maß der zu beobachtenden Knickwinkelgeschwindigkeit $KV_b$ einen Verstärkungsfaktor VST, welcher seinerseits ein wesentlicher Parameter für die Steuerung des Drosselwiderstandes bzw. Schließdruckes des Proportionalventiles ist. Aus diesem Grunde ist es wesentlich, daß der zu beobachtende Knickwinkel $K_{lb}$ bzw. die zu beobachtende Knickwinkelgeschwindigkeit $KV_b$ auch durch Rückkopplung mit den tatsächlich vorliegenden Istwerten des Knickwinkels $K_{lst}$ vom jeweils tatsächlich vorliegenden Knickwinkel abhängen. In der Praxis weicht nämlich der tatsächliche Knickwinkel $K_{lst}$ aufgrund äußerer Störgrößen, wie Seitenwind, Bodenunebenheiten usw. mehr oder weniger weit von dem zu erwartenden Knickwinkel $K_{stab}$ ab. Würde nun ein ausschließlich vom errechneten, zu erwartenden Knickwinkel $K_{stab}$ abhängiger Parameter zur Steuerung des Proportionalventiles herangezogen, so könnte das Gelenkfahrzeug zum "Schwänzeln" oder ähnlich unerwünschten Fahrzuständen angeregt werden, wenn hinsichtlich der Amplitude und Phasenlage Abweichungen zwischen dem zeitlichen Verlauf des tatsächlich vorliegenden Kickwinkels $K_{lst}$ und dem zu erwartenden und berechneten Knickwinkel $K_{stab}$ auftreten.

Dieses Problem wird durch die Bestimmung des zu beobachtenden Knickwinkels $K_{lb}$ ausgeräumt, da durch die Rückkopplung mit dem tatsächlich vorliegenden Istwert des Knickwinkels $K_{lst}$ eine Synchronisation hinsichtlich Amplituden- und Phasenlage erreicht wird.

Die Gewichtungs- bzw. Rückkopplungsfaktoren $g_1$, $g_2$ usw. sind zweckmäßig gerade so groß gewählt, daß niederfrequente Störeinflüsse die Werte von $K_{lb}$ bzw. $KV_b$ beeinflussen, während höherfrequente Einflüsse auf den jeweils tatsächlich vorliegenden Knickwinkel $K_{lst}$ nur stark abgeschwächt berücksichtigt werden.

Des weiteren wird ein Verstärkungsfaktor VST berechnet. Dieser Verstärkungsfaktor steigt gemäß Fig. 3e von einem Minimalwert (beispielsweise 1) in Abhängigkeit vom berechneten Wert $KV_b$ linear auf einen Maximalwert an.

Schließlich werden noch die Differenzen $K_{diff} = K_{st} - K_{lst}$ sowie $dK = K_{stab} - K_{lst}$ berechnet.

Nunmehr wird zunächst überprüft, ob ein im wesentlichen stationärer Fahrzustand, beispielsweise annähnerd Geradeausfahrt oder annähernd stationäre Kreisfahrt mit konstantem Lenkwinkel, vorliegt oder nicht. Dazu wird überprüft, ob der Absolutwert von $K_{diff}$ oberhalb oder unterhalb einer Knickwinkeltoleranz KT, beispielsweise ± 0,5, liegt. Falls dies der Fall ist, wird für den Schließdruck des Proportional-Ventiles ein Sollwert $P_{soll}^{(1)}$ berechnet, und zwar als Produkt des für die jeweilige Geschwindigkeit ermittelten Wertes $P_g$ sowie des Verstärkungsfaktors VST.

Falls kein genähert stationärer Fahrzustand vorliegt, d.h. falls der Absolutwert von $K_{diff}$ größer als die Knickwinkeltoleranz KT ist, so wird zunächst überprüft, ob der Absolutwert des vom Istwertgeber 21 gemessenen Istwertes der Knickwinkelgeschwindigkeit KV unterhalb einer Schranke EPS liegt, beispielsweise unterhalb von 0,2 Grad/sec.

Falls dies der Fall ist, liegt ein stabiler Fahrzustand vor. In diesem Falle wird für den Schließdruck des Proportional-Druckbegrenzungsventiles 3 ein Sollwert $p_{soll}^{(2)}$ berechnet, welcher eine vorgegebene Funktion von $P_g$ und VST sowie dem Absolutwert von $K_{diff}$ darstellt. Dabei steigt der berechnete Sollwerte $P_{soll}^{(2)}$ mit zunehmenden Werten von $P_g$ und VST an und fällt mit wachsendem Absolutwert von $K_{diff}$ ab.

Falls der Absolutwert von KV nicht unterhalb der Schranke EPS liegt, wird zunächst überprüft, ob die Fahrgeschwindigkeit V kleiner als eine Schranke $V_{kopp}$, beispielsweise 5 km/h, ist. Falls dies der Fall ist, wird des weiteren überprüft, ob die tatsächlich gemessene Knickwinkelgeschwindigkeit KV eine Richtung hat, bei der die Differenz zwischen dem Istwert $K_{ist}$ des Knickwinkels und dem Wert $K_{st}$ des Knickwinkels für stationäre Kreisfahrt bei dem jeweils vorliegenden Lenkwinkel gegen Null geht. Mathematisch ist dies gleichbedeutend damit, ob der Quotient aus $K_{diff}$ und KV größer als Null ist oder nicht. Wenn dies der Fall ist, liegt ein stabiles Fahrverhalten vor, und für den Schließdruck des Proportional-Druckbegrenzungsventiles wird wiederum ein Sollwert $P_{soll}^{(2)}$ als Funktion von $P_g$ und VST und vom Absolutwert von $K_{diff}$ berechnet.

Falls die Fahrgeschwindigkeit oberhalb der angegebenen Schranke $V_{kopp}$ liegt, wird des weiteren überprüft, ob der Absolutwert von dK, d.h. der Absolutwert der Differenz zwischen $K_{stab}$ und $K_{ist}$, unterhalb einer Schranke SEP liegt, beispielsweise unterhalb vo 2,5°. Falls dies der Fall ist, liegt ein stabiliser Fahrzustand vor und für den Schließdruck des Proportional-Druckbegrenzungsventiles wird wiederum der vorgenannte Sollwert $P_{soll}^{(2)}$ berechnet.

Falls die genannte Schranke SEP überschritten ist, wird überprüft, ob dK und KV gleiches Vorzeichen haben, d.h. ob der Quotient dieser beiden Größen großer als Null ist oder nicht. Falls dies der Fall ist, liegt ein stabiler Fahrzustand vor, weil sich der Istwert $K_{ist}$ des Knickwinkels dem berechneten Wert für stabile Kreisfahrt $K_{stab}$ annähert. In diesem Falle wird für den Schließdruck des Proportional-Druckbegrenzungsventiles wiederum der vorgenannte Sollwert $P_{soll}^{(2)}$ berechnet.

Falls die genannte Bedingung nicht erfüllt ist, liegt ein instabiles Fahverhalten vor, d.h. ein gefährlicher Fahrzustand. Dies ist gleichbedeutend, daß der Schließdruck des Proportional-Druckbegrenzungsventiles 3 auf den Maximalwert $P_{max}$ eingestellt werden soll, d.h. $P_{soll}^{(3)} = P_{mx}$.

Die oben angegebenen Abfragen, ob der Absolutwert der Differenz dK zwischen dem Istwert des Knickwinkels $K_{ist}$ und dem für idealisierte Bedingungen bei stabiliser Kurvenfahrt berechneten zu erwartenden Knickwinkel $K_{stab}$ unterhalb der Schranke SEP liegt und ob diese Differenz dK und die Knickwinkelgeschwindigkeit KV gleiches Vorzeichen haben (d.h. ob die Relativbewegung zwischen Vorderwagen 10 und Nachläuferwagen 11 eine die Abweichung des Istwertes $K_{ist}$ von dem zu erwartenden Wert $K_{stab}$ des Knickwinkels vergrößernde oder verkleinernde Tendenz hat), stellen die beiden Hauptkriterien für eine Entscheidung darüber dar, ob ein instabiler und damit gefährlicher oder ein hinreichend stabiler Fahrzustand vorliegt oder nicht, d.h. ob die Bewegung des Gelenkes 12 zwischen Vorder- und Nachläuferwagen 10, 11 gesperrt bzw. weitestgehend gesperrt oder steuerbar gedämpft werden soll.

Dementsprechend ist es grundsätzlich möglich, zur Steuerung des Proportionalventiles lediglich die in Fig. 3 mit A und B gekennzeichneten Abfragen durchzuführen und alle übrigen Abfragen wegzulassen. Jedoch ist die Durchführung der übrigen Abfragen vorteilhaft, weil dadurch der Umfang der durchzuführenden Rechenoperationen verringert wird, d.h. die notwendigen Rechenoperationen können mit verminderter Genauigkeit durchgeführt werden.

Nach Abschluß der genannten Rechenoperationen wird noch überprüft, ob der jeweils berechnete Sollwert für den Schließdruck den Maximalwert $P_{max}$ überschreitet. Sollte dies der Fall sein, so wird anstelle des berechneten Wertes nachfolgend der Maximalwert $P_{max}$ benutzt. Sodann werden nicht dargestellte elektrische Endstufen der Steuerschaltung 18 entsprechend den berechneten Sollwerten $P_{soll}$ bzw. entsprechend dem Maximalwert $P_{max}$ in grundsätzlich bekannter Weise angesteuert, so daß sich der Schließdruck des Proportional-Druckbegrenzungsventiles, welches seinerseits von den Endstufen gesteuert wird, entsprechend den genannten Werten ändert. Damit erfolgt eine vom jeweiligen Fahrzustand abhängige Dämpfung der Knickbewegungen des Gelenkes 12 bzw. eine Sperrung desselben. Die veränderte Dämpfung bzw. die Sperrung des Gelenkes 12 beeinflußt wiederum die von den Istwertgebern 19 bis 21 gemessenen Größen, mit der Folge, daß der beschriebene Funktionsablauf mit entsprechend veränderten Anfangsgrößen abläuft und der Schließdruck des Proportional-Druckbegrenzungsventiles dementsprechend geänderten Fahrzustand angepaßt wird.

Bei Rückwärtsfahrt erfolgt neben einer mehr oder weniger starken Dämpfung der Knickbewegungen des Gelenkes bzw. einer eventuellen Sperrung desselben gegebenenfalls auch ein automatischer Eingriff in die Steuerung des Fahrzeugmotors und/oder eine automatische Betätigung der Fahrzeugbremsen. Insbesondere wird das Fahrzeug bei Rückwärtsfahrt automatisch verlangsamt bzw. abgestopt, wenn bei

7

## EP 0 245 624 B1

bereits vorhandenen relativ großen Knickwinkeln hohe Fahrgeschwindigkeiten oder große Knickwinkelgeschwindigkeiten auftreten.

Die genannten Rechenoperationen werden ständig mit einer Zyklus- bzw. Taktzeit von beispielsweise 25 ms oder 27,5 ms wiederholt.

Gegebenenfalls kann die Steuerschaltung bei fehlendem oder ausgefallenem Istwertgeber 21, welcher — wie oben erwähnt wurde — ein Differenzierglied darstellt und aus dem Knickwinkel $K_{ist}$ die Knickwinkelgeschwindigkeit KV ermittelt und der Steuerschaltung 18 zuführt, die Knickwinkelgeschwindigkeit KV auch aus den Istwerten $K_{ist}$ des Knickwinkels berechnen.

## Patentansprüche

1. Knickschutzvorrichtung für willkürlich lenkbare Gelenkfahrzeuge, insbesondere Gelenkbusse, bestehend aus einem lenkbaren Vorderwagen (10) und mindestens einem damit über Gelenk (12) verbundenen Nachläuferwagen (11), mit Istwertaufnehmern (19, 20) für den Lenkwinkel (LW) der Lenkräder und den Knickwinkel ($K_{ist}$) des Gelenkes (12) sowie einer Steuerschaltung (18), die eingangsseitig mit den Istwertgebern (19, 20) und ausgangsseitig mit einer Ventilanordnung zur Steuerung des Zu- bzw. Abflusses von Fluid, insbesondere Hydraulikmedium, zu bzw. von Verdrängeraggregaten, insbesondere Kolben-Zylinder-Aggregaten (13', 13''), verbunden ist, welche zur passiven Knickwinkelsteuerung zwischen den gelenkig verbundenen Wagen (10, 11) mit insgesamt mindestens zwei Kammern (1, 2; 1', 2') angeordnet sind, von denen bei Änderung des Knickwinkels ($K_{ist}$) jeweils eine ihr Volumen unter Abgabe von Fluid verkleinert und eine ihr Volumen vergrößert, wobei die ihr Volumen bei Knickwinkeländerungen gegensinnig ändernden Kammern (1, 2; 1', 2') zum Austausch von Fluid bzw. Hydraulikmedium über ein die Ventilanordnung bildendes Proportionalventil (3) mit steuerbarem Drosselwiderstand bzw. Schließdruck verbunden sind, dadurch gekennzeichnet, daß als Teil der eingangsseitig zusätzlich zu den bereits genannten Istwertgebern (19, 20) für Lenk- und Knickwinkel (LW, $K_{ist}$) mit Istwertgebern für die Fahrgeschwindigkeit (V) verbundenen Steuerschaltung (18) ein Prozessor bzw. Rechner angeordnet ist, welcher aus den jeweiligen Istwerten von Lenkwinkel (LW) sowie Fahrgeschwindigkeit (V) einen bei stabiler Fahrt unter idealisierten Bedingungen zu erwartenden zeitabhängigen Wert des Knickwinkels ($K_{stab}$) ermittelt bzw. berechnet (Rechnersimulation des Fahrzustandes), und daß die Steuerschaltung (18) das Proportionalventil (3) im Sinne eines maximalen Drosselwiderstandes bzw. Schließdruckes (P) oder einer Sperrung betätigt, wenn der Betrag der Abweichung (dK) zwischen dem Istwert des Knickwinkels ($K_{ist}$) und dem jeweils zu erwartenden Knickwinkel ($K_{stab}$) eine Schwelle (SEP) überschreitet und gleichzeitig die aus den Signalen des Istwertgebers (20) für den Knickwinkel ($K_{ist}$) ermittelbare Relativbewegung zwischen Vorder- und Nachläuferwage (10, 11) eine die Abweichung vergrößernde Tendenz hat, bzw. im Sinne eines nach vorgebbarer Funktion ansteigenden bzw. abnehmenden Drosselwiderstandes bzw. Schließdruckes ansteuert, wenn der Betrag der Abweichung (dK) unter der Schwelle (SEP) liegt und/oder die Relativbewegung eine die Abweichung (dK) verkleinernde Tendenz hat.

2. Knickschutzvorrichtung nach Anspruch 1, dadurch gekennzeichnet, daß der Prozessor bzw. Rechner den in einem Zeitintervall bzw. -takt ($t_n$) zu erwartenden Wert des Knickwinkels ($K_{stab}$) berechnet gemäß

$$K_{stab} (t_n) = a_i K_{stab} (t_{n-1}) + a_j K_{stab} (t_{n-2}) + a_k K_{st} (t_n)$$

wobei $t_{n-2}$, $t_{n-1}$, $t_n$ aufeinanderfolgende Zeitintervalle bzw. -takte darstellen, $a_i$, $a_j$, $a_k$ von der Fahrgeschwindigkeit (V) abhängige Faktoren sind und $K_{st}$ eine vom jeweiligen Lenkwinkel (LW) abhängige Größe ist, insbesondere der diesem Lenkwinkel (LW) zugeordnete Wert des Knickwinkels für stationäre Kreisfahrt.

3. Knickschutzvorrichtung nach einem der Ansprüche 1 oder 2, dadurch gekennzeichnet, daß die Steuerschaltung (18) das Proportionalventil (3) im Sinne eines nach der vorgebbaren Funktion ansteigenden bzw. abnehmenden Drosselwiderstandes bzw. Schließdruckes ansteuert, indem Drosselwiderstand bzw. Schließdruck mit dem Betrag der tatsächlichen Knickwinkelgeschwindigkeit (KV) bzw. — bevorzugt — einer damit korrellierten Größe ($KV_b$) ansteigt bzw. abnimmt.

4. Knickschutzvorrichtung nach Anspruch 3, dadurch gekennzeichnet, daß der Drosselwiderstand bzw. Schließdruck zusätzlich mit dem Betrag einer Abweichung ($K_{diff}$) zwischen dem jeweiligen Istwert des Knickwinkels ($K_{ist}$) und dem Wert der Knickwinkels ($K_{st}$), welcher dem jeweiligen Lenkwinkel (LW) im Falle einer stationären Kreisfahrt zugeordnet ist, ansteigt bzw. abnimmt.

5. Knickschutzvorrichtung nach einem der Ansprüche 3 oder 4, dadurch gekennzeichnet, daß der Prozessor bzw. Rechner die mit der Knickwinkelgeschwindigkeit (KV) korrellierte Größe ($KV_b$) bestimmt, indem ein zu beobachtender Knickwinkel ($K_{lb}$) berechnet und zur Ermittlung der mit der tatsächlichen Knickwinkelgeschwindigkeit (KV) korrellierten Größe ($KV_b$) differenziert wird, und daß der zu beobachtende Knickwinkel ($K_{lb}$) gegenüber dem bei idealisierten Bedingungen zu erwartenden Knickwinkel ($K_{stab}$) durch Berücksichtigung des Istwertes des Knickwinkels ($K_{ist}$) mit vorzugsweise von der Fahrgeschwindigkeit abhängigen Gewichtungsfaktoren ($g_1$, $g_2$) im Sinne einer Synchronisation an den Istwert ($K_{ist}$) modifiziert ist.

6. Knickschutzvorrichtung nach einem der Ansprüche 1 bis 5, dadurch gekennzeichnet, daß die Steuerschaltung (18) das Proportionalventil (3) auch dann im Sinne eines nach der vorgebbaren Funktion ansteigenden bzw. abnehmenden Drosselwiderstandes bzw. Schließdruckes (P) ansteuert, wenn der Betrag der tatsächlichen Knickwinkelgeschwindigkeit (KV), welche mittels gesonderten Istwertgebers (21) meßbar und/oder aus den Istwerten des Knickwinkels ($K_{ist}$) — z.B. durch Differentiation — berechenbar ist, unter einem Schwellwert (EPS) liegt.

7. Knickschutzvorrichtung nach einem der Ansprüche 1 bis 6, dadurch gekennzeichnet, daß die Steuerschaltung (18) das Proportionalventil (3) auch dann im Sinne eines nach der vorgebbaren Funktion ansteigenden bzw. abnehmenden Drosselwiderstandes bzw. Schließdruckes (P) ansteuert, wenn der Betrag der tatsächlichen Knickwinkelgeschwindigkeit (KV) über einem Schwellwert (EPS) und gleichzeitig die Fahrgeschwindigkeit (V) unter einem Schwellwert ($V_{kopp}$) liegen und sich der Istwert des Knickwinkels ($K_{ist}$) im Sinne einer Annäherung an einen vom Rechner bestimmbaren Wert für stationäre Kreisfahrt ($K_{st}$) mit dem jeweiligen Istwert des Lenkwinkels (LW) annähert.

8. Knickschutzvorrichtung nach einem der Ansprüche 1 bis 7, dadurch gekennzeichnet, daß die Steuerschaltung (18) das Proportionalventil (3) auch dann im Sinne eines mit der vorgebbaren Funktion ansteigenden bzw. abnehmenden Drosselwiderstandes bzw. Schließdruckes (P) ansteuert, wenn der Istwert des Knickwinkels ($K_{ist}$) um mehr als den vorgegebenen Schwellwert (SEP) vom zu erwartenden Wert des Knickwinkels ($K_{stab}$) abweicht und gleichzeitig die Knickwinkeländerung bzw. Knickwinkelgeschwindigkeit (KV) eine Richtung haben, bei der sich die Abweichung (dK) zwischen dem Istwert des Knickwinkels ($K_{ist}$) und dem zu erwartenden Wert des Knickwinkels ($K_{stab}$) vermindert.

9. Knickschutzvorrichtung nach einem der Ansprüche 1 bis 8, dadurch gekennzeichnet, daß die Steuerschaltung (18) das Proportionalventil (3) derart steuert, daß in den sich jeweils verkleinernden Kammern (1, 2 oder 1', 2') bzw. auf der Eingangsseite des Proportionalventiles (3) ein Druck (P) vorliegt, welcher entsprechend der mit der Knickwinkelgeschwindigkeit (KV) korrellierten Größe ($KV_b$) anwächst bzw. abnimmt, wenn die Abweichung zwischen dem Istwert des Knickwinkels ($K_{ist}$) und dem für den jeweiligen Lenkwinkel (LW) berechneten Wert des Knickwinkels für stationäre Kreisfahrt ($K_{st}$) unterhalb einer vorgegebenen Schranke (KT) liegt.

10. Knickschutzvorrichtung nach einem der Ansprüche 1 bis 9, dadurch gekennzeichnet, daß die Steuerschaltung (18) das Proportionalventil (3) derart steuert, daß in den sich jeweils verkleinernden Kammern (1, 2 oder 1', 2') bzw. auf der Eingangsseite des Proportionalventiles (3) ein Druck (P) vorliegt, welcher entsprechend der mit der Knickwinkelgeschwindigkeit (KV) korrellierten Größe ($KV_b$) sowie dem Betrag der Differenz zwischen dem Istwert des Knickwinkels ($K_{ist}$) und dem für dem jeweiligen Lenkwinkel (LW) berechneten Wert des Knickwinkels für stationäre ($K_{st}$) anwächst bzw. abnimmt, wenn der Betrag der Abweichung ($K_{diff}$) zwischen dem Istwert des Knickwinkels ($K_{ist}$) und dem für den jeweiligen Lenkwinkel (LW) berechneten Wert des Knickwinkels für stationäre Kreisfahrt ($K_{st}$) oberhalb einer vorgegebenen Schranke (KT) liegt und kein Kriterium vorliegt, welches die Steuerschaltung (18) zur Betätigung des Proportionalventiles (3) im Sinne eines maximalen Drosselwiderstandes bzw. Schließdruckes ($P_{max}$) oder einer Sperrung veranlaßt.

11. Knickschutzvorrichtung nach einem der Ansprüche 1 bis 10, dadurch gekennzeichnet, daß die Steuerschaltung (18) das Proportionalventil (3) bei Betätigung im Sinne eines maximalen Drosselwiderstandes bzw. Schließdruckes ($P_{max}$) so steuert, daß in den sich jeweils verkleinernden Kammern (1, 2 oder 1', 2') bzw. auf der Eingangsseite des Proportionalventiles (3) ein maximaler Druck ($P_{max}$) vorliegt.

12. Knickschutzvorrichtung nach einem der Ansprüche 1 bis 11, dadurch gekennzeichnet, daß ein auf der Eingangsseite des Proportionalventiles (3) angeschlossener, an sich bekannter Druckschalter (5) oberhalb eines Schwellwertes des Druckes (50 bar) seine eine und unterhalb dieses Schwellwertes seine andere Lage einnimmt, und daß die Steuerschaltung (18) die Lage des Druckschalters (5) abfragt, sobald eine Änderung des Knickwinkels ($K_{ist}$) erfolgt und das Proportionalventil (3) in einem Sinne angesteuert wird, daß auf der Eingangsseite desselben bzw. in den sich jeweils verkleinernden Kammern (1, 2 oder 1', 2') ein Druck oberhalb einer oberen Schwelle (80 bar) oberhalb des Schwellwertes (50 bar) oder unterhalb einer unteren Schwelle (20 bar) unterhalb des Schwellwertes (50 bar) erzeugt werden soll.

13. Knickschutzvorrichtung nach einem der Ansprüche 1 bis 12, dadurch gekennzeichnet, daß die Steuerschaltung (18) bei Vor- und Rückwärtsfahrt unterschiedlich arbeitet.

14. Knickschutzvorrichtung nach einem der Ansprüche 1 bis 13, dadurch gekennzeichnet, daß als Istwertgeber für die Fahrgeschwindigkeit (V) zwei Impulsgeber angeordnet sind, welche phasenverschoben mit positiver Phasenverschiebung in der einen Fahrtrichtung und negativer Phasenverschiebung in der anderen Fahrtrichtung arbeiten, und daß die Steuerschaltung (18) auf die unterschiedliche Phasenlage reagiert.

15. Knickschutzvorrichtung nach einem der Ansprüche 1 bis 14, dadurch gekennzeichnet, daß die Steuerschaltung (18) eingangsseitig mit einem Geber (24) für die Stellung des Getriebewählhebels (Vortwärtsfahrt, Rückwärtsfahrt) verbunden ist.

16. Knickschutzvorrichtung nach einem der Ansprüche 1 bis 15, dadurch gekennzeichnet, daß die Lenk- und Knickwinkelgeber (19, 20) redundant angeordnet sind.

17. Knickschutzvorrichtung nach einem der Ansprüche 1 bis 16, dadurch gekennzeichnet, daß die Steuerschaltung (18) bei fehlendem oder ausgefallenem Istwertgeber (21) für die Knickwinkelgeschwindigkeit (KV) dieselbe aus den Istwerten des Knickwinkels ($K_{ist}$) berechnet.

18. Knickschutzvorrichtung nach einem der Ansprüche 1 bis 17, dadurch gekennzeichnet, daß die Steuerschaltung (18) bei einer Fahrgeschwindigkeit unterhalb eines ersten Schwellwertes ($V_1$) bei vorangegangener Vorwärtsfahrt in Abhängigkeit von der Stellung eines Getriebewählhebels (Vorwärtsfahrt, Rückwärtsfahrt) auf Steuerung für Vorwärts- oder Rückwärtsfahrt entscheidet, bei vorangegangener Rückwärtsfahrt die Steuerung für Rückwärtsfahrt beibehält, sowie oberhalb dieses Schwellwertes ($V_1$) und unterhalb eines zweiten Schwellwertes ($V_2$) in Abhängigkeit von der in den Signalen der Istwertgeber (22) für die Geschwindigkeit (V) enthaltenden Information über die Fahrtrichtung auf Steuerung für Vorwärts- oder Rückwärtsfahrt entscheidet und oberhalb dieses zweiten Schwellwertes ($V_2$) die zuvor gewählte Art der Steuerung (entweder Vorwärts- oder Rückwärtsfahrt) beibehält.

## Revendications

1. Dispositif de protection lors d'un pivotement pour des véhicules articulés pouvant être dirigés à volonté, notamment pour des autobus articulés, constitués par uner voiture avant dirigeable (10) et au moins une voiture remorquée (11) reliée à la voiture avant par l'intermédiaire d'une articulation (12), comprenant des capteurs (19, 20) de valeurs réelles pour l'angle de braquage (LW) des roues directrices et l'angle de pivotement ($K_{réel}$) de l'articulation (12) ainsi qu'un circuit de commande (18) qui est raccordé, au niveau de son entrée, au capteur de valeurs réelles (19, 20) et, au niveau de sa sortie, à un dispositif à soupape servant à commander l'amenée et l'évacuation d'un fluide, notamment un fluide hydraulique, en direction ou à partir de mécanismes volumétriques, notamment de mécanismes à piston et cylindre (13', 13''), qui sont disposés de manière à réaliser la commande passive de l'angle de rotation entre les voitures articulées (10, 11) et comportent au moins deux chambres (1, 2; 1', 2'), l'une de ces chambres diminuant de volume sous l'effet de l'évacuation de fluide tandis que l'autre augmente de volume lors d'une variation de l'angle de pivotement ($K_{réel}$), et dans lequel les chambres (1, 2; 1', 2'), dont les volumes varient en sens opposé dans le cas de variations de l'angle de pivotement, sont raccordées à une résistance d'étranglement ou une pression de fermeture commandable, pour l'échange d'un fluide ou d'un liquide hydraulique, par l'intermédiaire d'une soupape à action proportionnelle (3) constituant le dispositif à soupape, caractérisé en ce qu'en tant que partie du circuit de commande (18) reliée en supplément, côté entrée, audit capteur de valeurs réelles (19, 26) pour l'angle de braquage et l'angle de pivotement (LW, $K_{réel}$) à des transmetteurs de valeurs réelles de la vitesse (V) du véhicule, il est prévu un processeur ou calculateur qui détermine ou calcule (simulation de l'état de déplacement par l'ordinateur), à partir des valeurs réelles respectives de l'angle de braquage (LW) et de la vitesse de déplacement (V), une valeur de l'angle de pivotement ($K_{stable}$), qui dépend du temps et à laquelle on peut s'attendre dans le cas d'un déplacement stable dans des conditions idéalisées, et que le circuit de commande (18) actionne la soupape à action proportionnelle (3) dans le sens de l'obtention d'une résistance d'étranglement ou d'une pression de fermeture (P) maximale ou d'un blocage, lorsque la valeur de l'écart (dK) entre la valeur réelle de l'angle de pivotement ($K_{réel}$) et l'angle de pivotement ($K_{stable}$) auquel on peut s'attendre respectivement, dépassent un seuil (SEP) et que simultanément le déplacement relatif, qui peut être déterminé à partir des signaux du transmetteur de valeurs réelles (20) pour l'angle de pivotement ($K_{réel}$), entre la voiture avant (10) et la voiture remorquée (11), a tendance à accroître l'écart, ou dans le sens d'un accroissement ou d'une réduction de la résistance d'étranglement ou de la pression de fermeture selon une fonction pouvant être prédéterminée, lorsque la valeur de l'écart (dK) est inférieure au seuil (SEP) et/ou que le déplacement relatif a tendance à réduire l'écart (dK).

2. Dispositif de protection lors d'un pivotement selon la revendication 1, caractérisé en ce que le processeur ou calculateur calcule la valeur de l'angle de pivotement ($K_{stable}$) à laquelle on peut s'attendre pendant un intervalle de temps ou une période de cadence ($t_n$), conformément à

$$K_{stable}(t_n) = a_i K_{stable}(t_{n-1}) + a_j K_{stable}(t_{n-2}) + a_k K_{st}(t_n) \quad t_{n-2}, t_{n-1}, t_n$$

représentant des intervalles de temps ou périodes de cadence successives, $a_i$, $a_j$, $a_k$ étant des facteurs dépendant de la vitesse de déplacement (V), et $K_{st}$ étant une grandeur qui dépend de l'angle de braquage (LW) respectif, notamment la valeur de l'angle de pivotement, associée à cet angle de braquage (LW), pour un déplacement circulaire stationnaire.

3. Dispositif de protection lors d'un pivotement selon la revendication 1 ou 2, caractérisé en ce que le circuit de commande (18) commande la soupape à action proportionnelle (3) dans le sens d'un accroissement ou d'une réduction de la résistance d'étranglement ou de la pression de fermeture conformément à la fonction pouvant être prédéterminée, la résistance d'étranglement ou la pression de fermeture augmentant ou diminuant avec la valeur de la vitesse angulaire effective de pivotement (KV) ou — de préférence — d'une grandeur ($KV_b$) corrélée à cette vitesse.

5. Dispositif de protection lors d'un pivotement selon l'une des revendications 3 ou 4, caractérisé en ce que le processeur ou calculateur détermine la grandeur ($KV_b$) corrélée à la vitesse angulaire de pivotement (KV), en calculant un angle de pivotement ($K_{lb}$) pouvant être observé et en prenant la différentielle de cet angle pour déterminer la grandeur ($KV_b$) corrélée à la vitesse angulaire effective de pivotement (KV), et que l'angle de pivotement ($K_{lb}$) pouvant être observé est modifié par rapport à l'angle de pivotement ($K_{stable}$) auquel on peut s'attendre dans le cas de conditions idéalisées, en tenant compte de la valeur réelle de

EP 0 245 624 B1

l'angle de pivotement (K$_{réel}$) et en faisant intervenir de préférence des facteurs de pivotement (g$_1$, g$_2$) dépendant de la vitesse de déplacement, dans le sens d'une synchronisation sur la vitesse réelle (K$_{réel}$).

6. Dispositif de protection lors d'un pivotement selon l'une des revendications 1 à 5, caractérisé en ce que le circuit de commande (18) commande la soupape à action proportionnelle (3) également dans le sens d'un accroissement ou d'une réduction de la résistance d'étranglement ou de la pression de fermeture (P) conformément à la fonction pouvant être prédéterminé, lorsque la valeur de la vitesse angulaire effective de pivotement (KV), qui peut être mesurée à l'aide du transmetteur particulier de valeurs réelles (21) et/ou peut être calculée à partir des valeurs réelles de l'angle de pivotement (K$_{réel}$) — par exemple par différentiation — est inférieure à une valeur (EPS).

7. Dispositif de protection lors d'un pivotement selon l'une des revendications 1 à 6, caractérisé en ce que le circuit de commande (18) commande la soupape à action proportionnelle (3) également dans le sens d'un accroissement ou d'une réduction de la résistance d'étranglement ou de la pression de fermeture (P) conformément à la fonction pouvant être prédéterminée, lorsque la valeur de la vitesse angulaire effective de pivotement (KV) dépasse une valeur de seuil (EPS) et que simultanément la vitesse de déplacement (V) est inférieure à une valeur de seuil (V$_{couplage}$) et que la valeur réelle de l'angle de pivotement (K$_{réel}$) se rapproche d'une valeur, pouvant être déterminée par le calculateur, pour un déplacement circulair stationnaire (K$_{st}$) avec la valeur réelle respective de l'angle de braquage (LW).

8. Dispositif de protection lors d'un pivotement selon l'une des revendications 1 à 7, caractérisé en ce que le circuit de commande (18) commande la soupape à action proportionnelle (3) également dans le sens d'un accroissement ou d'une réduction de la résistance d'étranglement ou de la pression de fermeture (P) conformément à la fonction pouvant être prédéterminée, lorsque la valeur réelle de l'angle de pivotement (K$_{réel}$) s'écarte d'une valeur, supérieure à la valeur de seuil prédéterminée (SEP), par rapport à la valeur à laquelle on peut s'attendre pour l'angle de pivotement (K$_{stable}$) et que simultanément la variation de l'angle de pivotement et la vitesse angulaire de pivotement (KV) ont une direction telle que l'écart (dK) entre la valeur réelle de l'angle de pivotement (K$_{réel}$) et la valeur, à laquelle on peut s'attendre, de l'angle de: pivotement (K$_{stable}$) diminue.

9. Dispositif de protection lors d'un pivotement selon l'une des revendications 1 à 8, caractérisé en ce que le circuit de commande (18) commande la soupape à action proportionnelle (3) de manière qu'il existe, dans les chambres (1, 2 ou 1', 2'), dont le volume diminue respectivement, ou sur le côtré entrée de la soupape à action proportionnelle (3), une pression (P), qui augmente ou diminue en fonction de la grandeur (KV$_b$) corrélée avec la vitesse angulaire de pivotement (KV) lorsque l'écart entre la valeur réelle de l'angle de pivotement (K$_{réel}$) et la valeur, calculée pour l'angle de braquage respectif (LW), de l'angle de pivotement pour un déplacement circulaire stationnaire (K$_{st}$) est inférieur à une limite prédéterminée (KT).

10. Dispositif de protection lors d'un pivotement selon l'une des revendications 1 à 9, caractérisé en ce que le circuit de commande (18) commande la soupape à action proportionnelle (3) de sorte qu'il existe, dans les chambres (1, 2 ou 1', 2'), dont le volume diminue respectivement, ou sur le côté entrée de la soupape à action proportionnelle (3), une pression (P), qui augmente ou diminue en fonction de la grandeur (KV$_b$) corrélée avec la vitesse angulaire de pivotement (KV) et de la valeur de la différence entre la valeur réelle de l'angle de pivotement (K$_{réel}$) et la valeur, calculée pour l'angle de braquage respectif (LW), de l'angle de pivotement pour le déplacement circulaire stationnaire (K$_{st}$), lorsque la valeur de l'écart (K$_{diff}$) entre la valeur réelle de l'angle de pivotement (K$_{réel}$) et la valeur, calculée pour l'angle de braquage respectif (LW), de l'angle de pivotement pour un déplacement circulaire stationnaire (K$_{st}$) est supérieure à une limite prédéterminée (KT) et qu'il n'existe aucun critère déclenchant le circuit de commande (18) pour qu'il actionne la soupape à action proportionnelle (3) dans le sens de l'obtention d'une résistance de blocage ou d'une pression de fermeture maximale (P$_{max}$) ou d'un blocage.

11. Dispositif de protection lors d'un pivotement selon l'une des revendications 1 à 10, caractérisé par le fait que le circuit de commande (18) commande la soupape à action proportionnelle (3) lors de l'actionnement, dans le sens de l'obtention d'une résistance d'étranglement ou d'un pression de fermeture maximale (P$_{max}$) de sorte qu'une pression maximale (P$_{max}$) est présente dans les chambres (1, 2 ou 1', 2'), dont le volume diminue respectivement, ou sur le côté entrée de la soupape à action proportionnelle (3).

12. Dispositif de protection lors d'un pivotement selon l'une des revendications 1 à 11, caractérisé en ce qu'un interrupteur manométrique (5) connu en soi, raccordé au côté entrée de la soupape à action proportionnelle (3), vient dans une position, pour une pression supérieure à une valeur de seuil (50 bars) et dans une autre position pour une pression inférieure à cette valeur de seuil, et que le circuit de commande (18) interroge la position de l'interrupteur manométrique (5) dès qu'il apparaît une variation de l'angle de pivotement (K$_{réel}$) et que la soupape à action proportionnelle (3) est commandée de telle sorte qu'une pression supérieur à un seuil supérieur (80 bars) doit être produite sur le côté entrée de la soupape ou dans les chambres (1, 2 ou 1', 2'), dont le volume diminue, au-dessus de la valeur de seuil (50 bars), et qu'une pression inférieure à un seuil inférieur (20 bars) doit être produite sur le côté entrée de la soupape ou dans lesdits chambres, au-dessous de la valeur de seuil (50 bars).

13. Dispositif de protection lors d'un pivotement selon l'une des revendications 1 à 12, caractérisé en ce que le circuit de commande (18) travaille différemment dans le cas d'un déplacement d'avance et d'un déplacement de recul.

14. Dispositif de protection lors d'un pivotement selon l'une des revendications 1 à 13, caractérisé en ce qu'il est prévu, comme transmetteurs de valeurs réelles pour la valeur de déplacement (V), deux

11

transmetteurs d'impulsions, qui travaillent en étant déphasés avec un déphasage positif dans un sens de déplacement et un déphasage négatif dans l'autre sens de déplacement, et que le circuit de commande (18) réagit à la position de phase différente.

15. Dispositif de protection lors d'un pivotement selon l'une des revendications 1 à 14, caractérisé en ce que le circuit de commande (18) est relié, côté entrée, à un transmetteur (24) indiquant la position du sélecteur de boîte de vitesses (marche avant, marche arrière).

16. Dispositif de protection lors d'un pivotement selon l'une des revendications 1 à 15, caractérisé en ce que les transmetteurs (19, 20) de l'angle de braquage et de l'angle de pivotement sont prévus d'une manière redondante.

17. Dispositif de protection lors d'un pivotement selon l'une des revendications 1 à 16, caractérisé en ce que dans le cas où le transmetteur de valeurs réelles (21) de la vitesse angulaire de pivotement (KV) n'est pas prévu ou est défaillant, le circuit de commande (18) calcule cette vitesse à partir des valeurs réelles de l'angle de pivotement ($K_{reel}$).

18. Dispositif de protection lors d'un pivotement selon l'une des revendications 1 à 17, caractérisé en ce que dans le cas d'une vitesse de déplacement inférieure à une première valeur de seuil ($V_1$) alors que le déplacement s'effectuait préalablement en marche avant, le circuit de commande (18) décide, en fonction de la position du sélecteur de boîte de vitesses (marche avant, marche arrière), de la commande pour la marche vant ou la marche arrière, alors que dans le cas où il s'agissait précédemment d'un déplacement en marche arrière, la commande est conservée pour la marche arrière, et que dans le cas d'une vitesse de déplacement supérieure à cette valeur de seuil ($V_1$) et inférieure à une seconde valeur de seuil ($V_2$), le circuit de commande décide d'une commande pour la marche avant ou la marche arrière, en fonction de l'information relative à la direction de déplacement et contenue dans les signaux du transmetteur de valeurs réelles (22) pour la vitesse (V), et maintient le type antérieurement sélectionné de commande (soit marche avant, soit marche arrière), dans le cas où la vitesse est supérieure à la seconde valeur de seuil ($V_2$).

## Claims

1. Anti-jack-knifing device for articulated vehicles steerable at will, particularly articulated buses, comprising a steerable front vehicle (10) and at least one trailer (11) joined with it by linkage (12), with actual value sensors (19, 20) for the steering angle (LW) of the steering wheels and the jack-knifing angle ($K_{ist}$) of the linkage (12) as well as a control circuit (18) which is connected on the input side with the actual value sensors (19, 20) and on the output side with a valve arrangement for controlling the inflow and outflow of fluid, particularly a hydraulic medium, to and from respective displacement units, particularly piston cylinder units (13', 13''), which arrangements are disposed for the passive jack-knifing control between the articulatedly linked vehicles (10, 11) with a total of at least two chambers (1, 2; 1', 2') of which, on the alteration of the jack-knifing angle ($K_{ist}$) respectively one decreases its volume further to the delivery of fluid, and one increases its volume, in which arrangement the chambers (1, 2; 1', 2') mutually changing their volume further to alterations of the anti-jack-knifing angle, are joined together for the exchange of fluid or hydraulic medium via a proportional valve (3) constituting the valve arrangement, with controllable throttle resistance or closing pressure, characterized in that a computer or processor is provided as a part of the control circuit (18) connected on the input side additionally to the above-stated actual valve sensors (19, 20) for steering angle and jack-knifing angle (LW, $K_{ist}$) with actual value sensors for the travelling speed (V) which processor or computer detects or computes from the respective actual values of steering angle (LW) as well as from the travelling speed (V) a time-dependent value of the jack-knifing angle ($K_{stab}$) to be expected on travel under idealized conditions (computer simulation of the travel conditions and in that the control circuit (18) actuates the proportional valve (3) in the sense of a maximum throttle resistance or closing pressure (P) or a closure, when the amount of the deviation (dK) between the actual value of the jack-knifing angle ($K_{ist}$) and the jack-knifing angle ($K_{stab}$) respectively to be awaited exceeds a threshold (SEP), and at the same time the relative movement between the front vehicle and the trailer (10, 11) ascertainable from the signals of the actual value sensor (20) for the jack-knifing angle ($K_{ist}$) has a tendency to increase the deviation, or controls it in the sense of a throttle resistance or closing pressure increasing or decreasing according to a predeterminable function, when the amount of the deviation (dK) lies under the threshold (SEP) and/or the relative movement has a tendency to reduce the deviation (dK).

2. An anti-jack-knifing device according to claim 1, characterized in that the processor or computer computes the value of the jack-knifing angle ($K_{stab}$) to be expected in a time interval or stroke ($t_n$) according to

$$K_{stab}(t_n) = a_i K_{stab}(t_{n-1}) + a_j K_{stab}(t_{n-2}) + a_k K_{st}(t_n)$$

wherein $t_{n-2}$, $t_{n-1}$, $t_n$ represents successive time intervals or strokes, $a_i$, $a_j$, $a_k$ are factors dependent on the travelling speed, and $K_{st}$ is a value dependent upon the respective steering angle (LW), particularly the value associated with this steering angle for the jack-knifing angle relating to stationary circular travel.

3. An anti-jack-knifing device according to one of claims 1 or 2, characterized in that the control circuit (18) controls the proportional valve (3) in the sense of a throttle resistance or closing pressure increasing or decreasing according to the predeterminable function, while the throttle resistance or closing pressure increases or decreases by the amount of the actual jack-knifing angle speed (KV) or — preferably — of a value (KV$_b$) correlated therewith.

4. An anti-jack-knifing device according to claim 3, characterized in that the throttle resistance or closing pressure increases or decreases additionally by the amount of a deviation (K$_{diff}$) between the respective actual value of the jack-knifing angle (K$_{ist}$) and the value of the jack-knifing angle (K$_{st}$) which is associated with the respective steering angle (LW) in the event of stationary circular travel.

5. An anti-jack-knifing device according to either claim 3 or 4, characterized in that the processor or computer determines the value (KV$_b$) correlated with the jack-knifing speed (KV), while a jack-knifing angle (K$_{ib}$) to be watched is calculated and is differentiated to defect the value (KV$_b$) correlated with the actual jack-knifing speed (KV), and in that the jack-knifing angle (K$_{ib}$) to be watched is modified in the sense of a synchronization with the actual value (K$_{ist}$) with respect to the jack-knifing angle (K$_{stab}$) to be expected under ideal conditions by considering the actual value of the jack-knifing angle (K$_{ist}$) with weighting factors (g$_1$, g$_2$) preferably dependent upon the travelling speed.

6. An anti-jack-knifing device according to one of claims 1 to 5, characterized in that the control circuit (18) controls the proportional value in the sense of a throttle resistance or closing pressure (P) rising or decreasing according to the predeterminable function also when the amount of the actual jack-knifing angle speed (KV) which is measurable by means of a separate actual value sensor (21) and/or is calculable from the actual values of the jack-knifing angle — e.g by differentiation — lies under a threshold value (EPS).

7. An anti-jack-knifing device according to one of claims 1 to 6, characterized in that the control circuit (18) controls the proportional valve in the sense of a throttle resistance or closing pressure (P) increasing or decreasing according to the predeterminable function also when the amount of the actual jack-knifing angle speed (KV) lies above a threshold value (EPS) and at the same time the travelling speed (V) lies under a threshold value (V$_{kopp}$) and the actual value of the jack-knifing angle (K$_{ist}$) comes closer to the respective actual value of the steering angle (LW) in the sense of a coming closer to a value for stationary circular travel (K$_{st}$) determinable by the computer.

8. An anti-jack-knifing device according to one of claims 1 to 7, characterized in that the control circuit (18) controls the proportional value in the sense of a throttle resistance or closing pressure (P) increasing or decreasing according to the predeterminable function also when the actual value of the jack-knifing angle (K$_{ist}$) deviates from the value to be expected of the jack-knifing angle (K$_{stab}$) by more than the predetermined threshold value (SEP), and at the same time the modification of jack-knifing angle or jack-knifing angle speed (KV) have a direction at which the deviation (dK) between the actual value of the jack-knifing angle (K$_{ist}$) and the value to be expected of the jack-knifing angle (K$_{stab}$) decreases.

9. An anti-jack-knifing device according to one of claims 1 to 8, characterized in that the control circuit (18) controls the proportional valve (3) in such a manner that in the respectively decreasing chambers (1, 2 or 1', 2'), or on the input side of the proportional valve (3) a pressure (P) is present which increases or decreases correspondingly with the value (KV$_b$) correlated with the jack-knifing angle speed (KV) when the deviation between the actual value of the jack-knifing angle (K$_{ist}$) and the value of the jack-knifing angle for stationary circular travel (K$_{st}$) calculated for the respective steering angle (LW) lies under a predetermined limit (KT).

10. An anti-jack-knifing device according to one of claims 1 to 9, characterized in that the control circuit (18) controls the proportional valve (3) in such a manner that in the respectively decreasing chambers (1, 2 or 1', 2'), or on the input side of the proportional valve (3) a pressure (P) is present which increases or decreases correspondingly with the value (KV$_b$) correlated with the jack-knifing angle speed (KV) as well as with the amount of the difference between the actual value of the jack-knifing angle (K$_{ist}$) and the value of the jack-knifing angle for stationary circular movement (K$_{st}$) calculated for the respective steering angle (LW) when the amount of the deviation (K$_{diff}$) between the actual value of the jack-knifing angle (K$_{ist}$) and the value of the jack-knifing angle for stationary circular movement (K$_{st}$) calculated for the respective steering angle (LW) lies over a predetermined limit (KT) and there exists no criterion which causes the control circuit (18) to operate the proportional valve (3) in the sense of a maximum throttle resistance or closing pressure (P$_{max}$), or a closure.

11. An anti-jack-knifing device according to one of claims 1 to 10, characterized in that the control circuit (18) controls the proportional valve (3) on an actuation in the sense of a maximum throttle resistance or closing pressure (P$_{max}$) in such a manner that in the respectively decreasing chambers (1, 2 or 1', 2'), or on the input side of the proportional valve (3) a maximum pressure (P$_{max}$) is present.

12. An anti-jack-knifing device according to one of claims 1 to 11, characterized in that a *per se* known pressure switch (5) connected on the input side of the proportional valve (3) assumes its one position above a threshold value of the pressure (50 bar), and its other position below said threshold value, and in that the control circuit (18) scans the position of the pressure switch (5) as soon as a modification of the jack-knifing angle (K$_{ist}$) occurs, and the proportional valve (3) is controlled in such a way that, on the input side thereof or in the respectively decreasing chambers (1, 2 or 1', 2'), a pressure is exerted above an upper threshold (80 bar) over the threshold value (50 bar) or below a lower threshold (20 bar) below the threshold value (50 bar).

13. An anti-jack-knifing device according to one of claims 1 to 12, characterized in that the control circuit (18) operates differently in forward and rearward travel.

# EP 0 245 624 B1

14. An anti-jack-knifing device according to one of claims 1 to 13, characterized in that, as actual value sensors for the travelling speed (V) two pulse generators are provided which operate in dephased manner with a positive phase shift in one direction of travel, and in negative phase shift in the other direction of travel, and in that the control circuit, and in that the control circuit (18) reacts to the different phase relationship.

15. An anti-jack-knifing device according to one of claims 1 to 14, characterized in that the control circuit (18) is connected on the input side with a sensor (14) for the position of the gear shift lever (forward drive, rearward drive).

16. An anti-jack-knifing device according to one of claims 1 to 15, characterized in that the steering angle and jack-knifing angle sensors (19, 20) are arranged in redundant manner.

17. An anti-jack-knifing device according to one of claims 1 to 16, characterized in that the control circuit (18), when the actual value sensor (21) is defective or inoperative, calculates the jack-knifing angle speed (KV) from the actual values of the jack-knifing angle ($K_{ist}$).

18. An anti-jack-knifing device according to one of claims 1 to 17, characterized in that the control circuit (18) at a travelling speed below a first threshold value ($V_1$), in the case of a preceding forward travel decides in favour of control for forward or rearward travel depending upon the position of a gear-shift lever (forward travel, rearward travel), in the case of a preceding rearward travel maintains the control for rearward travel, as well as above said threshold value ($V_1$) and under a second threshold value ($V_2$) decides, depending upon the information as regards direction of travel contained in the signals of the actual value sensors (22) for the speed (V), with respect to control for forward or rearward travel, and above said threshold value ($V_2$) maintains the previously selected manner of control (either forward or rearward travel).

14

FIG. 2

FIG. 1

FIG. 3

Meßwerterfassung

nein — V > 0 — ja

Steuerung
für
Rückwärtsfahrt

$$P_g = f(V)$$
$$K_{st} = f(LW)$$
$$K_{stab} = f(K_{st}, V, t)$$
$$K_{ib} = f(K_{st}, V, K_{ist}, t)$$

$$KV_b = \frac{d}{dt} K_{ib}$$
$$VST = f(KV_b)$$
$$K_{diff} = K_{st} - K_{ist}$$
$$dK = K_{stab} - K_{ist}$$

nein — $|K_{diff}| < KT$ — ja

$|KV| < EPS$ — ja

nein

$V < V_{Kopp}$ — ja — $K_{diff} / KV > 0$ — ja

nein — nein

A → $|dK| < SEP$ — ja

nein

B → $dK / KV > 0$ — ja

nein

$$P_{soll}^{(3)} = P_{max}$$

$$P_{soll}^{(2)} = f(P_g, VST, |K_{diff}|)$$

$$P_{soll}^{(1)} = P_g \cdot VST$$

Steuerung von Ventil 3

FIG. 3a

FIG. 3b

FIG. 3c

FIG. 3d

FIG. 3e